# FASCICULE DE BREVET EUROPEEN

(11) **EP 2 394 850 B1**
(45) Date de publication et mention de la délivrance du brevet: **30.01.2013**
(21) Numéro de dépôt: 11169451.9
(22) Date de dépôt: 10.06.2011
(51) Int. Cl.: B60Q 1/06

(54) **Système de correction manuel commun pour deux dispositifs d'éclairage dont un à correction automatique**
Gemeinsames manuell betätigbares Verstellsystem für zwei Beleuchtungsvorrichtungen, von denen eine automatisch verstellt werden kann
Manually operable adjusting system shared by two lighting devices, one of which being automatically adjustable

(30) Priorité: 10.06.2010 FR 1054576
(43) Date de publication de la demande: 14.12.2011
(73) Titulaire: VALEO VISION, 93012 Bobigny Cedex (FR)
(72) Inventeur: Bernard, Cyrille, 49370 POUËZE (FR); Come, Nicolas, 72200 LA FLECHE (FR); Lopez, Philippe, 49125 TIERCE (FR)

(56) Documents cités:
- EP-A1- 2 112 021
- EP-A2- 1 391 347
- FR-A1- 2 838 086
- US-A1- 2004 037 086

## Description

L'invention a trait à un dispositif d'éclairage équipé d'un double système de réglage du faisceau, l'un essentiellement dans une direction verticale et l'autre dans une direction essentiellement horizontale, et où le réglage dans la direction essentiellement verticale est automatique. L'invention a trait également à un projecteur comprenant un tel premier module d'éclairage et un deuxième module d'éclairage également réglable essentiellement verticalement.

Un dispositif d'éclairage selon le préambule de la revendication 1 est connu du document US 2004/0037086.

Le document de brevet FR 2 838 086 A1 divulgue un projecteur comprenant un module d'éclairage disposé sur un premier cadre monté pivotant par rapport à un deuxième cadre selon un axe généralement vertical. Le deuxième cadre est lui-même également pivotant par rapport au boîtier du projecteur selon un axe généralement horizontal. L'axe généralement vertical de pivotement du premier cadre est disposé approximativement au centre du cadre dans un plan perpendiculaire à la direction principale d'éclairage. Un premier dispositif de réglage motorisé travaillant en translation est disposé de manière à relier le deuxième cadre au premier cadre à un point distant de l'axe vertical de pivotement. Un deuxième dispositif de réglage motorisé travaillant en translation est disposé de manière à relier un point fixe (du boîtier du projecteur) avec le deuxième cadre à un point distant de l'axe horizontal de pivotement. Le premier dispositif de réglage motorisé permet d'assurer un réglage du faisceau selon l'horizontale et le deuxième dispositif de réglage permet d'assurer un réglage du faisceau selon la verticale. Cette construction permet ainsi un réglage automatique du faisceau dans deux directions perpendiculaires. Le réglage selon la verticale est imposé par la réglementation européenne pour tous les véhicules nouvellement immatriculés depuis le 01.01.1998. Il s'agit du réglage de la portée en fonction de l'inclinaison du véhicule. Le réglage selon l'horizontale correspond à une fonction d'éclairage dynamique en courbe (BDL pour « dynamic bending light»). Ce dispositif est cependant limité à une fonction d'éclairage dynamique en courbe dans la mesure où le ou les modules d'éclairage sont disposés sur le premier cadre et vont subir la rotation dudit cadre.

Le document de brevet FR 2 835 490 A1 divulgue essentiellement deux géométries de support de module d'éclairage réglable dans plusieurs directions. La première géométrie est similaire à celle du document précédent, à savoir qu'elle comprend un premier cadre pivotant par rapport à un second cadre selon un axe vertical, le second cadre étant pivotant selon un axe fixe horizontal. La seconde géométrie comprend un seul cadre monté sur une liaison à rotule à un bord et relié à un bord opposé à deux dispositifs de réglage motorisés à des emplacements distants l'un de l'autre sur ledit bord opposé. Cette géométrie permet de régler le faisceau d'éclairage similairement à la première géométrie. Les deux dispositifs motorisés doivent cependant être actionnés tous les deux de manière contrôlée afin d'assurer une fonction de réglage de la portée ou la fonction d'éclairage dynamique en courbe.

Le document de brevet FR 2 838 809 A1 divulgue similairement une géométrie de support de module d'éclairage permettant un réglage de la portée suivant la verticale et un réglage dynamique en courbe selon un axe horizontal. Une cadre support est monté pivotant par rapport à un axe fixe horizontal pour le réglage de portée et un cadre est monté à l'intérieur du cadre support, pivotant par rapport à ce cadre support selon un axe vertical.

Les constructions décrites dans les trois documents sus mentionnés sont essentiellement utiles pour la fonction dite « code » (fonction d'éclairage en présence de véhicules circulant dans le sens opposé) avec réglage dynamique en courbe en raison de la capacité de pivotement selon l'axe vertical allant jusqu'à un angle de ±15°, ±20° ou davantage encore.

De plus les fonctions d'éclairage utilisant la technologie LED nécessitent la présence de radiateurs et/ou de ventilateurs pour dissiper la chaleur générée par les LED en fonctionnement. La présence de ces éléments de dissipation thermique alourdit le système d'éclairage complet. En fonction de différentes contraintes supplémentaires comme des contraintes de vibrations, il peut s'avérer nécessaire de limiter le porte-à-faux notamment du système de réglage dynamique de la portée. Dans ce cas, il peut s'avérer nécessaire de prévoir un module supplémentaire, comme par exemple un module d'éclairage du type « route » (plein phare), sur un support indépendant. Dans ce cas, ce module ne pourra pas profiter du réglage de porté du module « code », si bien qu'un dispositif spécifique au module « route » sera nécessaire.

L'invention a pour objet de proposer un module d'éclairage et/ou un projecteur avec une correction automatique de portée palliant au moins un des inconvénients sus mentionnés, plus particulièrement simplifiant le montage de modules lourds tout en assurant une stabilité de montage satisfaisante.

L'invention consiste en un dispositif d'éclairage pour véhicule automobile, comprenant: un premier cadre mobile en rotation autour d'un premier axe fixe avec le véhicule et préférentiellement généralement vertical; un deuxième cadre mobile en rotation autour d'un deuxième axe généralement perpendiculaire au premier axe, fixe avec ledit premier cadre et préférentiellement généralement horizontal; au moins un réflecteur et un support de source lumineuse disposés sur ledit deuxième cadre, aptes à générer un faisceau d'éclairage; un dispositif de réglage motorisé mobile en translation reliant le premier cadre au deuxième cadre de manière à assurer un réglage automatique dudit faisceau dans une direction correspondant au premier axe, ledit dispositif étant apte à convertir le mouvement de rotation du moteur en un mouvement de translation; remarquable en ce que ledit dispositif motorisé comprend une denture extérieure centrée sur son axe de translation et agissant sur la conversion du mouvement de rotation en mouvement de translation; et ledit dispositif motorisé est disposé de manière à ce que son axe de translation soit essentiellement aligné avec le premier axe.

Ces mesures permettent de coupler le réglage du point ou niveau « zéro » du dispositif de réglage motorisé de la portée d'un premier dispositif d'éclairage avec le réglage notamment de portée d'un deuxième dispositif d'éclairage disposé à proximité. De par la construction définie ci-avant, le réglage du faisceau d'éclairage du premier dispositif selon une direction généralement horizontale est compatible avec le couplage entre les deux dispositifs.

Selon un mode avantageux de l'invention, le dispositif de réglage motorisé comprend une tige mobile en translation et liée en rotation, préférentiellement au moyen de cannelures, avec la denture extérieure. Cette construction est particulièrement intéressante car elle permet d'agir sur le point « zéro » du dispositif de réglage motorisé de manière assez simple et fiable, et ce en faisant tourner la tige de commande.

Selon un autre mode avantageux de l'invention, le dispositif de réglage motorisé comprend une vis animée en rotation par le moteur, le filetage de ladite vis coopérant avec un filetage femelle de la tige. Le réglage motorisé se fait par rotation de la vis qui agit en translation sur la tige de commande qui est, par ailleurs, maintenue en position angulaire fixe.

Selon un encore autre mode avantageux de l'invention, le dispositif de réglage motorisé comprend un élément généralement cylindrique et creux dans lequel la tige de commande est montée coulissante et supportant la denture extérieure.

Selon un encore autre mode avantageux de l'invention, la denture extérieure est conique et forme un épaulement sur la surface extérieure de l'élément généralement cylindrique et creux.

Selon un encore autre mode avantageux de l'invention, le dispositif de réglage motorisé comprend, en outre, un élément de fixation de l'élément généralement cylindrique et creux, ledit élément de fixation étant circulaire et en appui sur l'épaulement et ayant au moins une fenêtre d'accès à la denture extérieure.

Selon un encore autre mode avantageux de l'invention, le premier axe est situé à proximité d'un bord latéral dudit cadre. Cet agencement est particulièrement intéressant d'un point de vue encombrement et agencement du couplage avec un autre dispositif d'éclairage.

Selon un encore autre mode avantageux de l'invention, le premier cadre comprend au moins un élément de guidage à un bord opposé au bord latéral où est situé le premier axe, le ou les éléments guidage étant aptes à prendre appui sur un support fixe. Cet élément de guidage permet de soutenir le premier cadre et ainsi tout le poids du dispositif d'éclairage du côté le plus éloigné des fixations selon l'axe de pivotement dudit cadre.

Selon un encore autre mode avantageux de l'invention, le ou les éléments de guidage comprennent un tourillon fixe par rapport au premier cadre et orienté généralement perpendiculairement au premier axe.

Selon un encore autre mode avantageux de l'invention, le premier cadre comprend au moins une, préférentiellement deux fixations à rotule alignées sur le premier axe destinés à fixer le cadre mobile en rotation selon ledit axe.

Selon un encore autre mode avantageux de l'invention, la rotation du premier cadre selon l'axe généralement fixe du véhicule est limitée, préférentiellement à ± 10°, plus préférentiellement à ± 5°.

L'invention consiste également en un projecteur pour véhicule automobile comprenant un boîtier et remarquable en ce qu'il comprend un premier dispositif d'éclairage tel que décrit ci-avant, un deuxième dispositif avec un troisième cadre apte à pivoter selon un axe généralement parallèle au premier axe; un dispositif de réglage en translation relié au troisième cadre et apte à ajuster le faisceau du deuxième dispositif selon une direction correspondant au premier axe, ledit dispositif de réglage étant mécaniquement relié à la denture du dispositif de réglage motorisé.

Selon un mode avantageux de l'invention, le dispositif de réglage en translation comprend un organe rotatif de commande, ledit organe étant en prise mécanique avec un arbre de liaison en prise avec la denture du dispositif de réglage motorisé.

Selon un autre mode avantageux de l'invention, le dispositif de réglage en translation comprend une tige mobile en translation et une vis coopérant avec ladite tige, ladite vis étant relié en rotation avec l'arbre de liaison et/ou l'organe rotatif de commande via un renvoi d'angle.

Selon un encore autre mode avantageux de l'invention, le projecteur comprend au moins un support fixe coopérant avec un élément de guidage du premier cadre à un bord opposé au bord où le premier axe est approximativement situé.

Selon un encore autre mode avantageux de l'invention, le support fixe est un élément allongé avec une section en « U » dont l'ouverture est orientée vers l'élément de guidage du premier cadre.

Il est à noter que les notions de verticalité, d'horizontalité et de perpendicularité des axes de rotation des différents cadres ne sont pas à interpréter de manière stricte mais bien avec une certaine tolérance, par exemple de l'ordre de ±20%, préférentiellement de l'ordre de ±10°, plus préférentiellement encore de l'ordre de ±5%.

D'autres caractéristiques et avantages de la présente invention seront mieux compris à l'aide de la description et des dessins parmi lesquels :
La figure 1 est une vue en perspective d'un dispositif d'éclairage selon l'invention.
La figure 2 est une vue en plan de l'arrière du dispositif d'éclairage de la figure 1.
La figure 3 est une vue en plan d'un dispositif de réglage motorisé présent dans le dispositif selon l'invention.
La figure 4 est une vue en coupe du dispositif de réglage motorisé de la figure 3.
La figure 5 est une vue en perspective d'un module d'éclairage supplémentaire du dispositif des figures 1 et 2.
La figure 6 est une vue en plan d'une partie du dispositif d'éclairage selon les figures 1 et 2 combiné avec le module d'éclairage de la figure 5.

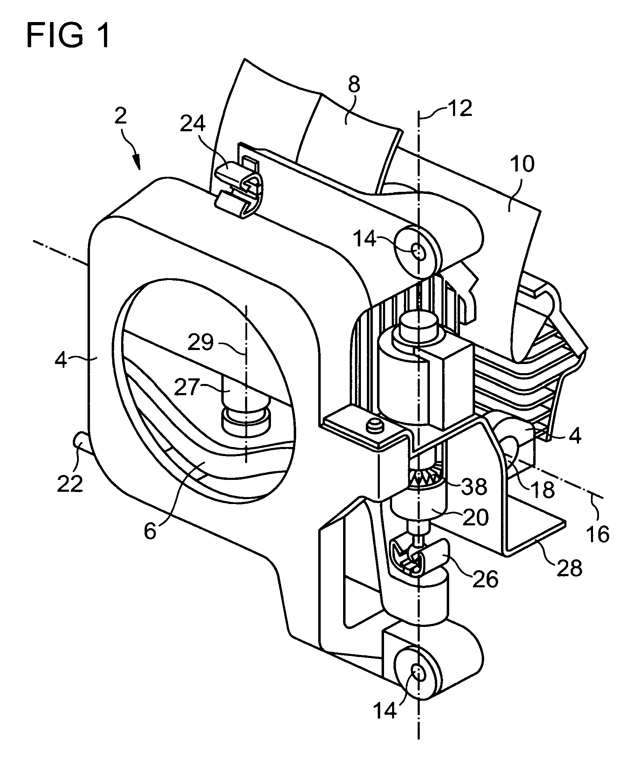

Le dispositif d'éclairage 2 illustré à la figure 1 comprend un premier cadre 4 destiné à être monté pivotant par rapport à un axe vertical. Le premier cadre 4 comprend à cet effet deux moyens de fixation du type à rotule 14 disposés le long d'un bord latéral du cadre 4. Ces moyens de fixation 14 consistent, chacun, en une pièce femelle, dite « capsule point fixe », clippée ou vissée dans un orifice pratiqué dans le cadre 4. Cette capsule point fixe comprend une cavité destinée à recevoir une partie généralement sphérique (non représentée) afin d'assurer une fixation du type à rotule. La partie sphérique est destinée à être fixée notamment par vissage à un élément du boîtier du projecteur comprenant le dispositif en question, et destinée à être introduite dans la cavité de la capsule lors du montage. La capsule point fixe comprend une surface d'entrée généralement conique de manière à guider de manière optimale la partie sphérique vers la cavité. Cette dernière comprend des moyens élastiques comme une ou plusieurs lamelles avec arrêt destinées à se déformer lors de l'insertion de la partie sphérique et à reprendre, après insertion, une position de retenue de la partie sphérique. La liaison à rotule ainsi formé par ce moyen de fixation présente un degré de liberté limité à un angle prédéfini compte tenu de sa construction. Le cadre 4 est maintenu au bâti ou boîtier du projecteur (non représenté) au moyen de deux capsules point fixe 14 disposées à distance l'une de l'autre le long d'un axe de pivotement généralement vertical 12.

Le cadre 4 comprend également un moyen de fixation à glissière 24, dit « capsule à glissière », disposé à distance de l'axe de pivotement 12. Cette capsule à glissière 24 est sous forme de pince destinée à recevoir une partie sphérique correspondante qui sera maintenu sans jeu dans la pince tout en étant apte à y coulisser. Cette capsule 24 est destinée à recevoir la tête sphérique correspondante d'un dispositif de réglage en translation (non représenté) destiné à assurer une liaison réglable entre le boîtier du projecteur et le cadre 4. Il peut s'agir d'une cassette de réglage avec renvoi d'angle vers le haut de manière à permettre un réglage depuis le haut du projecteur, par exemple via un tournevis. La cassette de réglage est destinée à être disposée selon une direction principale généralement parallèle à la direction d'éclairage du projecteur.

Les deux capsules à point fixe 14, la capsule à glissière 24 et la cassette de réglage permettent ainsi un réglage selon une direction généralement horizontale du faisceau d'éclairage du projecteur, et ce dans une amplitude assez limitée, par exemple limitée à ± 10°, préférentiellement ± 5°, plus préférentiellement ± 3°.

Le premier cadre 4 comprend également deux ergots 22 dont un seul est visible à la figure 1. Les ergots sont alignés avec une perpendiculaire à l'axe de pivotement 12, c'est-à-dire approximativement selon la direction d'éclairage du projecteur. Ces ergots sont destinés à coopérer par glissement avec un support de manière à reprendre des efforts verticaux et à ainsi soulager les capsules à point fixe 14.

Le dispositif d'éclairage 2 de la figure 1 comprend également un deuxième cadre 6 monté pivotant selon un axe généralement horizontal 16 par rapport au première cadre 4. Le deuxième cadre 6 supporte un premier module d'éclairage 8 et un deuxième module d'éclairage 10. Le premier module d'éclairage 8 est monté sur le deuxième cadre au moyen d'une liaison pivotante 27 selon un axe généralement vertical 29. Le module 8 projette un faisceau concentré à coupure pour la fonction code, ce faisceau étant dynamique en courbe. Le module 10 est fixe par rapport au deuxième cadre 6 est assure une fonction à coupure avec un faisceau plus large, également pour la fonction code. Chaque module comprend une ou plusieurs sources lumineuses, préférentiellement du type LED, et un réflecteur apte à réfléchir les rayons émis par la ou les sources lumineuses en un faisceau d'éclairage, et ce de manière connue. Il est à noter que les deux modules d'éclairage comprennent des ailettes de refroidissement disposées généralement sous et/ou derrière la ou les sources lumineuses en vue de leur refroidissement.

Le deuxième cadre est monté pivotant par rapport au premier cadre au moyen de deux tourillons 18 disposés de part et d'autre sur la partie avant du premier et du deuxième cadre.

Un dispositif de réglage motorisé 20 est disposé entre le premier cadre 4 et le deuxième cadre 6 afin d'assurer un réglage de l'angle entre ces deux cadres selon l'axe de pivotement 16. Ce dispositif de réglage motorisé est monté de manière rigide sur le premier cadre 4 via une tôle ou patte de fixation 28. Ce dispositif comprend un axe longitudinal généralement aligné avec l'axe vertical de pivotement 12 du premier cadre 4. Il comprend un moteur électrique et un mécanisme de conversion du mouvement de rotation du moteur en mouvement de translation d'une tige de commande en prise avec le deuxième cadre 6. La liaison entre la tige de commande et le deuxième cadre 6 est assurée par une capsule à glissière 26 similaire à la capsule 24 pour le pivotement du première cadre 4. Le dispositif motorisé permet d'assurer un réglage de l'inclinaison dans une direction généralement verticale du faisceau du dispositif d'éclairage. En d'autres termes, il s'agit ici du réglage de la portée du faisceau.

Il est à noter que le dispositif motorisé 20 comprend une denture ou roue dentée externe 38 centrée sur l'axe longitudinal et, partant, sur l'axe de pivotement du premier cadre 4. Cette denture fait partie du mécanisme de transmission et de conversion du mouvement de rotation du moteur. L'actionnement de cette pièce va permettre de modifier la position longitudinale de la tige de commande et, partant, la porté du faisceau sans intervention du moteur électrique. Plus particulièrement, l'actionnement de la roue dentée 38 va permettre un réglage manuel du point zéro du dispositif motorisé 20, comme cela va être décrit plus loin.

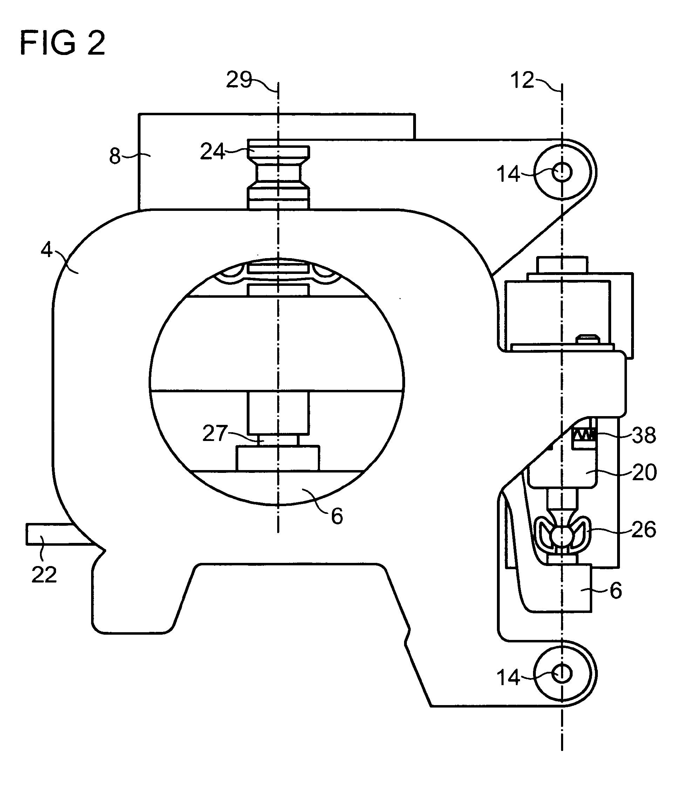

La figure 2 illustre bien l'alignement du dispositif de réglage motorisé 20 avec l'axe vertical de pivotement 12 du premier cadre 4. La tige de commande du dispositif comprend une tête partiellement sphérique destinée à coopérer avec la capsule à glissière 26. La roue dentée 38 est centrée sur l'axe 12 et est symétrique en révolution par rapport à cet axe. Il en résulte qu'une roue dentée correspondante peut coopérer avec elle tout en autorisant un pivotement du premier cadre 4 sans changement substantiel de l'angle de portée du dispositif d'éclairage. Etant donné l'angle de pivotement réduit, ce dernier n'aura qu'une influence négligeable sur la portée du faisceau.

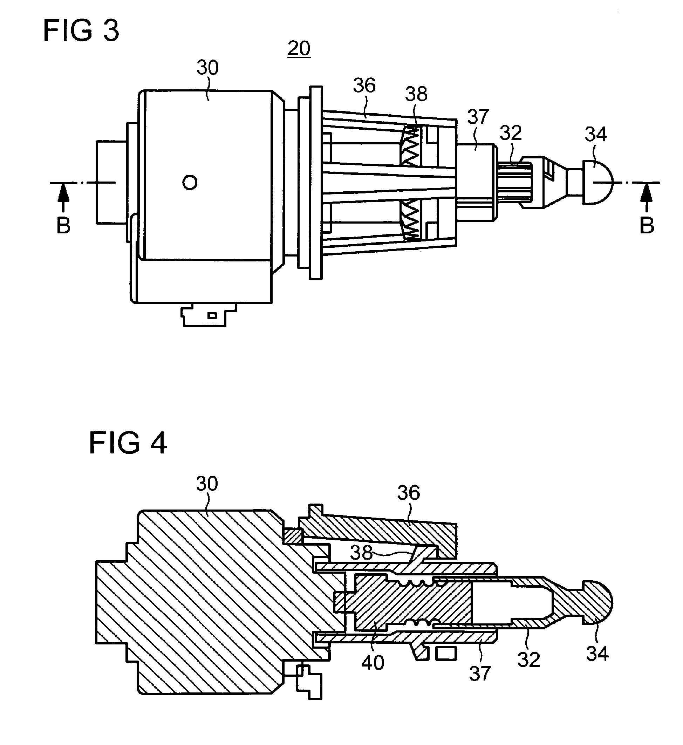

Le dispositif de réglage motorisé 20 est illustré de manière plus explicite à la figure 3. La figure 4 est une vue en coupe selon l'axe B-B montrant l'intérieur du mécanisme de conversion du mouvement de rotation du moteur en mouvement de translation du la tige de commande 32. Le dispositif de réglage comprend essentiellement une pièce cylindrique creuse 37 portant la roue dentée 38, cette pièce cylindrique étant maintenue contre le bloc du moteur 30 par une pièce de fixation 36. La tige de commande 32 coulisse à l'intérieur de la pièce cylindrique creuse. La pièce cylindrique creuse 37 comporte une série de cannelures sur sa surface intérieure et la tige de commande 32 comporte également une série de cannelures correspondantes destinées à coopérer avec les cannelures de la pièce cylindrique creuse. La tige de commande 32 est par conséquent apte à coulisser dans la pièce cylindrique creuse 37 tout en étant liée en rotation avec cette dernière. La tige de commande 32 est creuse avec une ouverture dirigée vers le moteur 30. Une vis 40 est disposée à l'intérieur de la pièce cylindrique creuse 37 et coopère via son filetage avec un filetage correspondant sur la surface intérieure de la tige de commande 32. La vis est liée en translation avec le bloc moteur 30, si bien que sa rotation va déplacer la tige de commande dans la mesure où cette dernière reste immobile en rotation. En effet, la pièce cylindrique creuse 37 est apte à tourner sur elle-même via une action extérieure sur la roue dentée 38, ce qui a pour conséquence de faire tourner la tige de commande sur elle-même et de modifier sa position longitudinale. Il est à noter que cette rotation est permise par la capsule à glissière avec laquelle la tête partiellement cylindrique 34 de la tige coopère. La tête partiellement cylindrique est en effet symétrique en révolution et peut tourner dans la capsule à glissière. En l'absence d'action extérieure sur la pièce cylindrique creuse 37, les forces de frottement sont telles qu'elle et la tige de commande resteront immobiles en rotation.

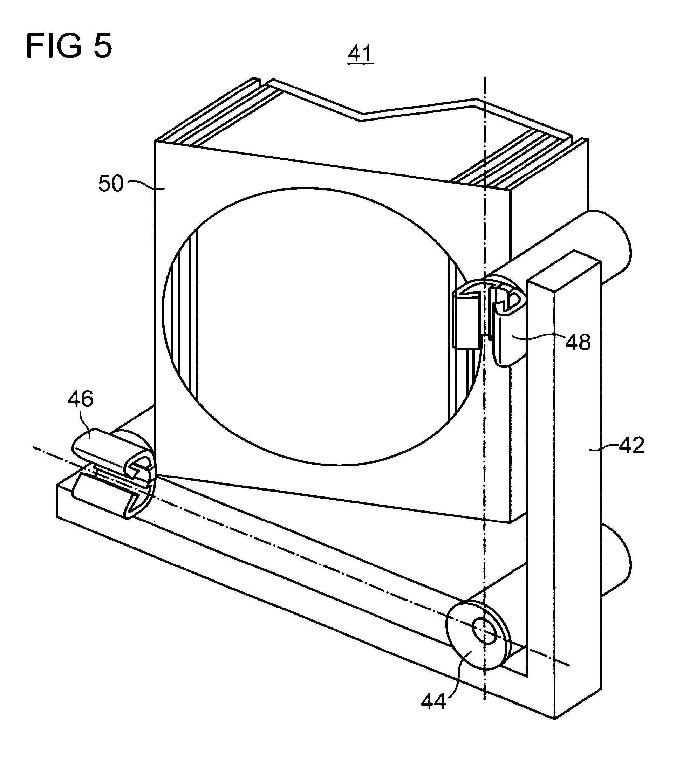

Un dispositif d'éclairage supplémentaire 41 est illustré la figure 5. Il s'agit d'un dispositif destiné à assurer la fonction d'éclairage dite « route». Ce dispositif comprend un cadre 42 illustré de manière assez schématique, supportant un ou plusieurs modules d'éclairage (non représentés). Une platine 50 est rigidement fixée au cadre 42 et supporte un radiateur à ailettes de refroidissement de la ou des sources lumineuses du ou des modules d'éclairage en question.

Le cadre 42 comporte trois points d'ancrage : un premier point d'ancrage du type à rotule concrétisé par une capsule à point fixe 44 similaire à celles du dispositif 2 aux figures 1 et 2 ; un deuxième point d'ancrage à un dispositif de réglage concrétisé par une capsule à glissière 46 située à distance du point d'ancrage à rotule 44, et un troisième point d'ancrage à un autre dispositif de réglage concrétisé par une capsule à glissière 48 située à distance du point d'ancrage à rotule 44. Le point d'ancrage à rotule 44 et les points d'ancrage mobiles 46 et 48 forment deux axes de pivotement du cadre 42 qui sont perpendiculaires, l'un étant généralement horizontal et l'autre étant généralement vertical.

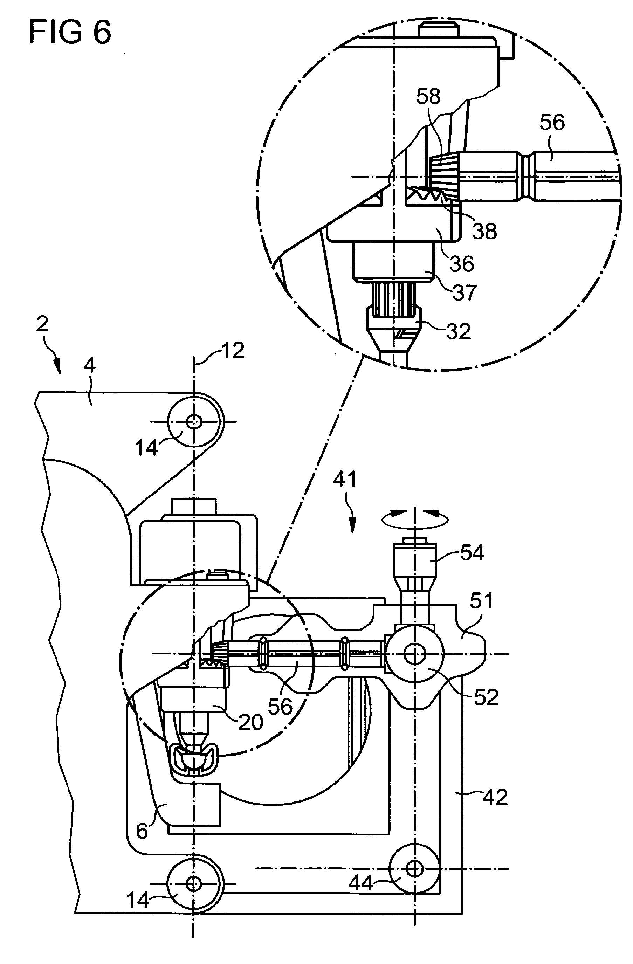

La figure 6 illustre le premier dispositif d'éclairage 2 assurant la fonction « code » couplé au dispositif d'éclairage supplémentaire 41 assurant la fonction « route ». Le dispositif 2 illustré aux figures 1 et 2 est illustré de manière partielle à la figure 6. On peut observer que le cadre 42 du dispositif supplémentaire est disposé de manière généralement parallèle au premier cadre 4 du dispositif 2. Les deux cadres 2, 42 sont fixés via leurs capsules à point fixe directement au boîtier du projecteur et via leurs capsules à glissières à des mécanismes de réglage qui sont eux-mêmes fixés au boîtier du projecteur.

Une platine 51 supporte un arbre de laison 56 coopérant avec la roue dentée extérieure 38 du dispositif de réglage motorisé et avec une cassette de réglage 52. L'arbre comporte des rainures circulaires disposées, chacune, dans un palier sous forme de nervure avec un profil circulaire ouvert correspondant. Une pièce de maintien (non représentée) opposée à la nervure vient sécuriser le maintien de la rainure circulaire dans le creux de chaque palier. La cassette de réglage 52 coopère avec la capsule à glissière supérieure (48 à la figure 5) du cadre 42 du dispositif supplémentaire 41. Cette cassette de réglage est fixée au boîtier du projecteur (non représenté) et agit en translation selon une direction correspondant essentiellement à la direction d'éclairage afin d'assurer un réglage de la portée du module « route » du dispositif en question. La cassette de réglage comprend une partie verticale 54 avec un axe rotatif (non représenté) en prise avec le mécanisme de réglage via un renvoi d'angle. Cette partie verticale permet un actionnement de la cassette de réglage et, partant, un réglage de la portée, via un tournevis venant en prise avec l'axe rotatif. L'arbre 56 est également en prise avec le mécanisme de réglage via également le renvoi d'angle. De la sorte, toute manipulation en rotation de la cassette de réglage via son accès supérieur est convertie en translation au niveau de la capsule à glissière correspondante (non visible à la figure 6) et également en mouvement de rotation de l'arbre 56. La rotation de cet arbre va occasionner la rotation de la roue dentée extérieure 38 et de la pièce cylindrique creuse 37 servant d'élément de guidage de la tige de commande. L'arbre 56 présente en effet une denture conique 58 à son extrémité et qui engrène avec la roue dentée 38. Cette rotation va occasionner la rotation de la tige de commande via les cannelures respectives de la pièce cylindrique creuse 37 et de la tige de commande 32. Cette rotation va avoir pour effet de modifier la position longitudinale de la tige de commande 32 et, partant, la portée du faisceau d'éclairage du type « code ».

Cette construction permet, via l'accès pour notamment un organe de commande comme un tournevis à une cassette de réglage du dispositif supplémentaire, de régler simultanément la portée de deux dispositifs d'éclairage dont l'un est pourvu d'une fonction de réglage horizontal via un cadre pivotant selon un axe généralement vertical. De manière plus générale, cette construction permet un réglage simultané de la portée de plusieurs dispositifs d'éclairage disposés côte à côté et dont au moins est également réglable dans une autre direction, préférentiellement une direction généralement horizontale.

Il est à noter que la pièce de fixation 36 de la pièce cylindrique creuse 37 avec la denture extérieure 38 au bloc moteur du dispositif de réglage motorisé 20 comporte au moins une fenêtre de manière à permettre un accès depuis l'extérieur à un axe de commande comme l'axe 56 de la figure 6. Pour ce faire, la pièce de fixation comporte idéalement trois bras de manière à présenter trois fenêtres réparties sur sa circonférence. La présence de plusieurs fenêtres donne au dispositif de réglage motorisé une certaine liberté de montage pour différentes applications.

La cassette de réglage 52 peut prendre différentes formes selon un principe bien connu de l'homme de métier. En effet, elle est idéalement constituée d'un mécanisme à vis permettant la conversion d'un mouvement de rotation en un mouvement de translation. Elle comporte sur sa face arrière (par rapport à la direction d'éclairage) une roue à denture conique (non visible) solidaire de la partie tournante du mécanisme à vis. L'axe rotatif (non visible) de la partie verticale 54 de la cassette comporte alors une denture en prise avec la denture conique. Il en va de même de l'arbre de liaison 56 entre les deux dispositifs d'éclairage. De la sorte, l'actionnement de l'axe rotatif de la partie verticale 54 va faire tourner la roue à denture conique de la partie tournante du mécanisme à vis, qui va alors faire tourner l'arbre de liaison 56.

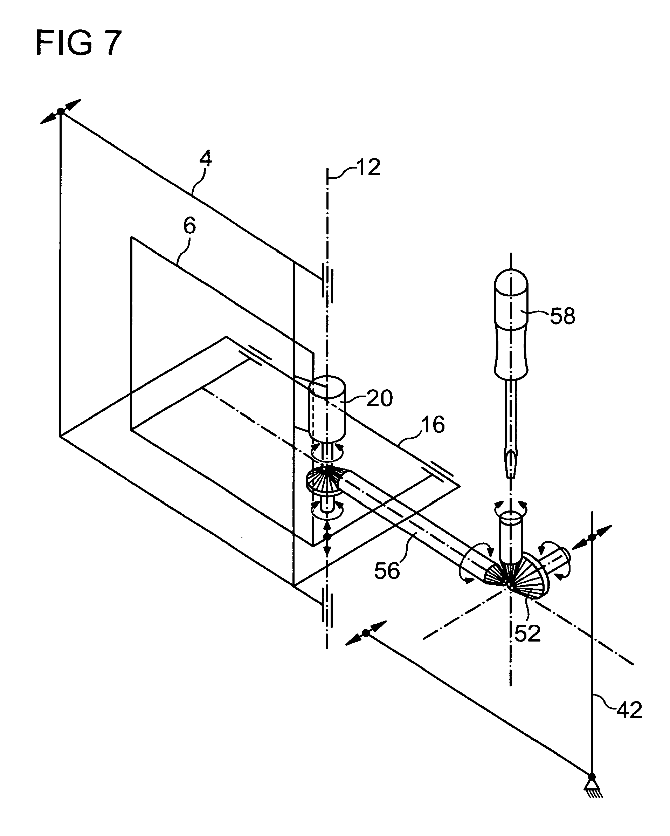

A des fins de clarté d'exposé, le principe des fonctions de réglage des deux dispositifs d'éclairage illustrés notamment à la figure 6 est illustré de manière schématique à la figure 7. On peut effectivement bien y observer le premier cadre mobile 4 pivotant par rapport à un axe généralement vertical 12 disposé à un bord latéral du cadre adjacent au dispositif d'éclairage supplémentaire. Le deuxième cadre 6 est monté pivotant sur le premier cadre, et ce par rapport à un axe généralement horizontal 16 disposé à proximité d'un bord avant du premier cadre 4. Le dispositif de réglage motorisé 20 est monté sur le premier cadre 4 de manière à être aligné avec l'axe vertical 12 en question. Ce dispositif est relié à un point du deuxième cadre 6 distant de l'axe horizontal 16 de manière à assurer le réglage automatique de la portée du faisceau. Le cadre 42 du dispositif supplémentaire est monté de manière articulée par rapport à un point fixe et peut être déplacé selon deux directions parallèles (illustrées par les double-flèches). Le point d'ancrage supérieur du cadre 42 est relié à la cassette de réglage 52. Cette dernière comprend, comme expliqué précédemment, un mécanisme à vis de conversion d'un mouvement de rotation provenant d'un accès accessible par un moyen de manipulation comme un tournevis 58 en un mouvement de translation du point d'ancrage supérieur du cadre 42. La cassette de réglage comprend un renvoi d'angle assurant la transmission du mouvement opéré par le moyen externe vers le mécanisme à vis ainsi que vers l'axe de liaison 56. Ce dernier comprend une denture en prise avec la denture externe du mécanisme de réglage motorisé. L'illustration de la figure 7 illustre bien le couplage des mécanismes de réglage des deux dispositifs d'éclairage tout en permettant un réglage du faisceau d'au moins un des deux dispositifs dans une direction généralement horizontale.

D'autres constructions de la cassette de réglage et du couplage entre les deux dispositifs d'éclairage sont bien sûr possibles. En effet, l'accès extérieur à un moyen de manipulation comme un tournevis ne doit pas nécessairement être vertical et/ou orienté vers le haut. En effet, il pourrait être latéral ou oblique en fonction de différents paramètres comme par exemple l'emplacement du projecteur et son accessibilité dans le véhicule. Cet accès pourrait être à l'arrière de la cassette de réglage en prise directe avec la partie tournante du mécanisme de conversion du mouvement de rotation en mouvement de translation. En fonction de la position relative entre les deux dispositifs, il se peut que le renvoi d'angle entre l'arbre de liaison 56 et la partie tournante de la cassette de réglage ne soit pas nécessaire. En effet, il est tout-à-fait envisageable que le dispositif « route » soit plus en avant que le dispositif « code » et de prévoir le point fixe articulé du cadre du dispositif « route » du côté du dispositif « code ». Dans ce cas l'axe de liaison serait orienté très approximativement selon la direction principale d'éclairage, c'est-à-dire vers l'avant, et serait en prise directe avec la partie tournante de la cassette de réglage. La direction principale de la cassette de réglage du point d'ancrage supérieur du cadre du dispositif « route » ne doit pas nécessairement être alignée avec la direction d'éclairage. En effet, elle peut présenter un certain angle avec cette direction, préférentiellement jusqu'à 30°.

Il est à noter que le dispositif de réglage en translation (cassette de réglage) peut être également motorisé, notamment similairement au dispositif de réglage motorisé du dispositif « code». Dans ce cas, le réglage manuel via un accès extérieur permettrait de régler simultanément la position « zéro » des deux dispositifs d'éclairage.

## Revendications

1. Dispositif d'éclairage (2) pour véhicule automobile, comprenant :
un premier cadre (4) mobile en rotation autour d'un premier axe (12) fixe avec le véhicule et préférentiellement généralement vertical ;
un deuxième cadre (6) mobile en rotation autour d'un deuxième axe (16) généralement perpendiculaire au premier axe (12), fixe avec ledit premier cadre (4) et préférentiellement généralement horizontal ;
au moins un réflecteur et un support de source lumineuse (8, 10) disposés sur ledit deuxième cadre (6), aptes à générer un faisceau d'éclairage ;
un dispositif de réglage motorisé (20) mobile en translation reliant le premier cadre (4) au deuxième cadre (6) de manière à assurer un réglage automatique dudit faisceau dans une direction correspondant au premier axe,
ledit dispositif (20) étant apte à convertir le mouvement de rotation du moteur en un mouvement de translation ;
**caractérisé en ce que**
ledit dispositif motorisé (20) comprend une denture extérieure (38) centrée sur son axe de translation et agissant sur la conversion du mouvement de rotation en mouvement de translation ; et
ledit dispositif motorisé (20) est disposé de manière à ce que son axe de translation soit essentiellement aligné avec le premier axe (12).

2. Dispositif d'éclairage selon la revendication précédente, **caractérisé en ce que** le dispositif de réglage motorisé (20) comprend une tige de commande (32) mobile en translation et liée en rotation, préférentiellement au moyen de cannelures, avec la denture extérieure (38).

3. Dispositif d'éclairage selon la revendication précédente, **caractérisé en ce que** le dispositif de réglage motorisé (20) comprend une vis (40) animée en rotation par le moteur (30), le filetage de ladite vis coopérant avec un filetage femelle de la tige de commande (32).

4. Dispositif d'éclairage selon l'une des revendications 2 et 3, **caractérisé en ce que** le dispositif de réglage motorisé (20) comprend un élément généralement cylindrique et creux (37) dans lequel la tige de commande (32) est montée coulissante, et supportant la denture extérieure.

5. Dispositif d'éclairage selon la revendication précédente, **caractérisé en ce que** la denture extérieure (38) est conique et forme un épaulement sur la surface extérieure de l'élément généralement cylindrique et creux (37).

6. Dispositif d'éclairage selon la revendication précédente, **caractérisé en ce que** le dispositif de réglage motorisé (20) comprend, en outre, un élément de fixation (36) de l'élément généralement cylindrique et creux (37), ledit élément de fixation (36) étant circulaire et en appui sur l'épaulement et ayant au moins une fenêtre d'accès à la denture extérieure (38).

7. Dispositif d'éclairage selon l'une des revendications précédentes, **caractérisé en ce que** le premier axe (12) est situé à proximité d'un bord latéral du premier cadre (4).

8. Dispositif d'éclairage selon la revendication précédente, **caractérisé en ce que** le premier cadre (4) comprend au moins un élément de guidage (22) à un bord opposé au bord latéral où est situé le premier axe de rotation (12), le ou les éléments guidage (22) étant aptes à prendre appui sur un support fixe.

9. Dispositif d'éclairage selon la revendication précédente, **caractérisé en ce que** le ou les éléments de guidage comprennent un tourillon fixe (22) par rapport au premier cadre (4) et orienté généralement perpendiculairement au premier axe de rotation (12) du premier cadre (4).

10. Dispositif d'éclairage selon l'une des revendications précédentes, **caractérisé en ce que** le premier cadre (4) comprend au moins une, préférentiellement deux fixations à rotule (14) alignées sur le premier axe (12) et destinés à fixer le cadre (4) mobile en rotation selon ledit axe (12).

11. Dispositif d'éclairage selon l'une des revendications précédentes, **caractérisé en ce que** la rotation du premier cadre (4) selon le premier axe (12) généralement fixe du véhicule est limitée, préférentiellement à ± 10°, plus préférentiellement à ± 5°.

12. Projecteur pour véhicule automobile comprenant un boîtier et **caractérisé en ce qu'**il comprend un premier dispositif d'éclairage (2) selon l'une des revendications précédentes, un deuxième dispositif (41) avec un troisième cadre (42) apte à pivoter selon un axe généralement parallèle au premier axe (12) ; un dispositif de réglage en translation (52) relié au troisième cadre (42) et apte à ajuster le faisceau du deuxième dispositif (41) selon une direction correspondant au premier axe, ledit dispositif de réglage (52) étant mécaniquement relié à la denture extérieure (38) du dispositif de réglage motorisé (20).

13. Projecteur selon la revendication précédente, **caractérisé en ce que** le dispositif de réglage en translation (52) comprend un organe rotatif de commande (54), ledit organe étant en prise mécanique avec un arbre de liaison (56) en prise avec la denture (38) du dispositif de réglage motorisé (20).

14. Projecteur selon la revendication précédente, **caractérisé en ce que** le dispositif de réglage en translation (52) comprend une tige mobile en translation et une vis coopérant avec ladite tige, ladite vis étant relié en rotation avec l'arbre de liaison (56) et/ou l'organe rotatif de commande (54) via un renvoi d'angle.

15. Projecteur selon l'une des revendications 12 à 14, **caractérisé en ce qu'**il comprend au moins un support fixe coopérant avec un élément de guidage (22) du premier cadre (4) à un bord opposé au bord où le premier axe (12) est approximativement situé.

## Claims

1. Lighting device (2) for a motor vehicle, comprising:
a first frame (4) movable in rotation around a first, preferably generally vertical axis (12) fixed to the vehicle;
a second frame (6) movable in rotation around a second, preferably generally horizontal axis (16), fixed to said first frame (4) and generally perpendicular to the first axis (12),
at least one reflector and a light source carrier (8, 10) arranged on said second frame (6), capable of generating a light beam,
a motorized adjustment device (20) movable in translation connecting the first frame (4) to the second frame (6) for automatic adjustment of said beam in a direction corresponding to the first axis, said device (20) being capable of converting the rotation movement of the motor into a translation movement, **characterized in that** said motorized device (20) comprises an external gear (38) centred on its translation axis and acting on the conversion of the rotation movement into a translation movement, and
said motor (20) is arranged so that its translation axis is substantially aligned with the first axis (12).

2. Lighting device according to the above claim, **characterized in that** the motorized device (20) comprises a control rod (32) movable in translation and connected in rotation, preferably by means of splines, to the external gear (38).

3. Lighting device according to the above claim, **characterized in that** the motorized device (20) comprises a screw (40) driven in rotation by the motor (30), the thread of said screw cooperating with a female thread of the rod control (32).

4. Lighting device according to either of claims 2 and 3, **characterized in that** the motorized device (20) comprises a generally cylindrical and hollow element (37), wherein the control rod (32) is slidably mounted, and supporting the external gear.

5. Lighting device according to the above claim, **characterized in that** the external gear (38) is conical and forms a shoulder on the outer surface of the generally cylindrical, hollow element (37).

6. Lighting device according to the above claim, **characterized in that** the motorized device (20) further comprises a fastening element (36) of the generally cylindrical, hollow element (37), said fixing element (36) being circular and bearing on the shoulder and having at least one window for access to the external gear (38).

7. Lighting device according to any one of the above claims, **characterized in that** the first axis (12) is located near a lateral edge of the first frame (4).

8. Lighting device according to the above claim, **characterized in that** the first frame (4) comprises at least one guide element (22) at an edge opposite the side edge where the first rotation axis (12) is located, the guide element(s) (22) being capable of bearing on a fixed support.

9. Lighting device according to the above claim, **characterized in that** the guide element(s) comprise a fixed pivot pin (22) relative to the first frame (4) and directed generally perpendicularly to the first rotation axis (12) of the first frame (4).

10. Lighting device according to any ane of the above claims, **characterized in that** the first frame (4) comprises at least one, preferably two ball joints (14) aligned with the first axis (12) and designed to secure the frame (4) movably in rotation around said axis (12).

11. Lighting device according to any one of the above claims, **characterized in that** the rotation of the first frame (4) around the generally fixed first axis (12) of the vehicle is limited, preferably to ± 10 °, more preferably to ± 5 °.

12. Motor vehicle headlight comprising a housing and **characterized in that** it comprises a first lighting device (2) according to any one of the above claims, a second device (41) with a third frame (42) capable of pivoting along an axis that is generally parallel to the first axis (12), a translation adjustment device (52) connected to the third frame (42) and capable of adjusting the beam of the second device (41) in a direction corresponding to the first axis, said adjustment device (52) being mechanically connected to the external gear (38) of the motorized adjustment device (20).

13. Headlight according to the above claim, **characterized in that** the translation adjustment device (52) comprises a rotary control member (54), said member being mechanically engaged with a connecting shaft (56) engaged with the gear (38) of the motorized adjustment device (20).

14. Headlight according to the above claim, **characterized in that** the translation adjustment device (52) comprises a rod that is movable in translation and a screw cooperating with said rod, said screw being connected in rotation to the connecting shaft (56) and/or the rotary control member (54) via a bevel gear.

15. Headlight according to any one of claims 12 to 14, **characterized in that** it comprises at least one fixed support cooperating with a guide member (22) of the first frame (4) on an edge opposite to the edge where the first axis (12) is approximately located.

## Patentansprüche

1. Kraftfahrzeugbeleuchtungsvorrichtung (2) mit:
einem ersten Rahmen (4), der um eine fahrzeugfeste und vorzugsweise allgemein senkrechte erste Achse (12) drehbeweglich ist;
einem zweiten Rahmen (6), der um eine zur ersten Achse (12) allgemein lotrechte, am ersten Rahmen (4) feste und vorzugsweise allgemein waagerechte zweite Achse (16) drehbeweglich ist;
wenigstens einem Reflektor und einer Lichtquellenhalterung (8, 10), die auf dem zweiten Rahmen (6) angeordnet sind und ein Lichtbündel zu erzeugen vermögen;
einer translatorisch bewegbaren, motorisch angetriebenen Stellvorrichtung (20), die den ersten Rahmen (4) mit dem zweiten Rahmen (6) solchermaßen verbindet, dass ein automatisches Einstellen des Lichtbündels in eine der ersten Achse entsprechenden Richtung gewährleistet ist, wobei die Vorrichtung (20) die Drehbewegung des Motors in eine Translationsbewegung umzuwandeln vermag;
**dadurch gekennzeichnet, dass**
die motorisch angetriebene Vorrichtung (20) eine Außenverzahnung (38) aufweist, die auf ihre Translationsachse zentriert ist und auf die Umwandlung der Drehbewegung in die Translationsbewegung einwirkt; und
die motorisch angetriebene Vorrichtung (20) solchermaßen angeordnet ist, dass ihre Translationsachse im Wesentlichen mit der ersten Achse (12) fluchtet.

2. Beleuchtungsvorrichtung nach dem vorhergehenden Anspruch,
**dadurch gekennzeichnet, dass** die motorisch angetriebene Stellvorrichtung (20) eine Stellstange (32) umfasst, die translatorisch beweglich und mit der Außenverzahnung (38) vorzugsweise mittels Rillen drehbeweglich verbunden ist.

3. Beleuchtungsvorrichtung nach dem vorhergehenden Anspruch,
**dadurch gekennzeichnet, dass** die motorisch angetriebene Stellvorrichtung (20) eine Schraube (40) umfasst, die durch den Motor (30) in Drehung versetzt wird, wobei das Gewinde der Schraube mit einem Innengewinde der Stellstange (32) zusammenwirkt.

4. Beleuchtungsvorrichtung nach einem der Ansprüche 2 oder 3,
**dadurch gekennzeichnet, dass** die motorisch angetriebene Stellvorrichtung (20) ein allgemein zylindrisches und hohles Element (37) umfasst, in dem die Stellstange (32) gleitend lagert und das die Außenverzahnung trägt.

5. Beleuchtungsvorrichtung nach dem vorhergehenden Anspruch,
**dadurch gekennzeichnet, dass** die Außenverzahnung (38) konisch ist und auf der Außenseite des allgemein zylindrischen und hohlen Elements (37) einen Vorsprung bildet.

6. Beleuchtungsvorrichtung nach dem vorhergehenden Anspruch,
**dadurch gekennzeichnet, dass** die motorisch angetriebene Stellvorrichtung (20) ferner ein Element (36) zur Befestigung des allgemein zylindrischen und hohlen Elements (37) aufweist, wobei das Befestigungselement (36) rund ist und auf dem Vorsprung aufliegt und wenigstens eine Zugangsöffnung zu der Außenverzahnung (38) besitzt.

7. Beleuchtungsvorrichtung nach einem der vorhergehenden Ansprüche,
**dadurch gekennzeichnet, dass** die erste Achse (12) in der Nähe eines Seitenrands des ersten Rahmens (4) angeordnet ist.

8. Beleuchtungsvorrichtung nach dem vorhergehenden Anspruch,
**dadurch gekennzeichnet, dass** der erste Rahmen (4) wenigstens ein Führungselement (22) an einem Rand aufweist, der dem Seitenrand entgegengesetzt ist, bei dem die erste Drehachse (12) liegt, wobei das oder die Führungselemente (22) an einer feststehenden Halterung in Anlage zu kommen vermögen.

9. Beleuchtungsvorrichtung nach dem vorhergehenden Anspruch,
**dadurch gekennzeichnet, dass** das oder die Führungselemente einen bezüglich des ersten Rahmens (4) feststehenden Lagerzapfen (22) umfassen, der allgemein lotrecht zur ersten Drehachse (12) des ersten Rahmens (4) ausgerichtet ist.

10. Beleuchtungsvorrichtung nach einem der vorhergehenden Ansprüche,
**dadurch gekennzeichnet, dass** der erste Rahmen (4) wenigstens eine, vorzugsweise zwei Kugelgelenkbefestigungen (14) aufweist, die auf die erste Achse (12) ausgerichtet und dazu bestimmt sind, den um die Achse (12) drehbeweglichen Rahmen (4) festzulegen.

11. Beleuchtungsvorrichtung nach einem der vorhergehenden Ansprüche,
**dadurch gekennzeichnet, dass** die Drehung des ersten Rahmens (4) um die allgemein fahrzeugfeste erste Achse (12) des Fahrzeugs beschränkt ist, vorzugsweise auf ± 10°, noch bevorzugter auf ± 5°.

12. Kraftfahrzeugscheinwerfer mit einem Gehäuse und **dadurch gekennzeichnet, dass** er umfasst: eine erste Beleuchtungsvorrichtung (2) nach einem der vorhergehenden Ansprüche, eine zweite Vorrichtung (41) mit einem dritten Rahmen (42), der um eine allgemein zur ersten Achse (12) parallele Achse zu schwenken vermag; eine translatorische Stellvorrichtung (52), die mit dem dritten Rahmen (42) verbunden ist und das Lichtbündel der zweiten Vorrichtung (41) in einer der ersten Achse entsprechenden Richtung zu verstellen vermag, wobei die Stellvorrichtung (52) mit der Außenverzahnung (38) der motorisch angetriebenen Stellvorrichtung (20) mechanisch verbunden ist.

13. Scheinwerfer nach dem vorhergehenden Anspruch,
**dadurch gekennzeichnet, dass** die translatorische Stellvorrichtung (52) ein drehbewegliches Stellorgan (54) umfasst, wobei das Organ mit einer Verbindungswelle (56) mechanisch in Eingriff ist, die mit der Verzahnung (38) der motorisch angetriebenen Stellvorrichtung (20) in Eingriff steht.

14. Scheinwerfer nach dem vorhergehenden Anspruch,
**dadurch gekennzeichnet, dass** die translatorische Stellvorrichtung (52) eine translatorisch bewegliche Stange und eine mit der Stange zusammenwirkende Schraube umfasst, wobei die Schraube mit der Verbindungswelle (56) und/oder dem drehbeweglichen Stellorgan (54) über ein Winkelgetriebe drehbeweglich verbunden ist.

15. Scheinwerfer nach einem der Ansprüche 12 bis 14,
**dadurch gekennzeichnet, dass** er wenigstens eine feststehende Halterung umfasst, die mit einem Führungselement (22) des ersten Rahmens (4) an einem Rand zusammenwirkt, der dem Rand entgegengesetzt ist, bei dem die erste Achse (12) ungefähr liegt.
